# EUROPEAN PATENT SPECIFICATION

(11) **EP 3 570 568 B1**
(45) Date of publication and mention of the grant of the patent: **03.11.2021**
(21) Application number: 18800459.2
(22) Date of filing: 22.03.2018
(51) Int. Cl.: H04W 4/02, G07C 5/08, G07C 5/00, H04L 29/08, H04W 4/44

(54) **VEHICLE REPAIRING METHOD AND APPARATUS**
FAHRZEUGREPARATURVERFAHREN UND -VORRICHTUNG
PROCÉDÉ ET DISPOSITIF DE RÉPARATION DE VÉHICULE

(43) Date of publication of application: 20.11.2019
(73) Proprietor: Shenzhen Launch Software Co., Ltd., Shenzhen Guangdong 518000 (CN)
(72) Inventor: LIU, Jun, Shenzhen, Guangdong 518000 (CN); WEI, Zewei, Shenzhen, Guangdong 518000 (CN); CHENG, Chi, Shenzhen, Guangdong 518000 (CN); ZHAN, Wei, Shenzhen, Guangdong 518000 (CN); MAI, Xueying, Shenzhen, Guangdong 518000 (CN)
(74) Representative: Wallinger Ricker Schlotter Tostmann
(86) International application number: PCT/CN2018/080026
(87) International publication number: WO 2019/178806

(56) References cited:
- CN-A- 102 968 112
- CN-A- 102 968 112
- CN-A- 103 728 971
- US-A1- 2007 093 947
- US-A1- 2013 124 032

## Description

### TECHNICAL FIELD

The present disclosure pertains to the technical field of automobiles, and particularly, to a vehicle maintenance method and a vehicle maintenance apparatus.

### BACKGROUND

With continuous development of science and technologies and continuous improvement on people's living standards, the quantity of automobiles also grows continuously. In addition, people are paying more and more attention to efficiency and accuracy of vehicle maintenance.

In related art, a vehicle owner or maintenance personnel may perform diagnosis on a vehicle by using a diagnosis equipment, and manually maintain the vehicle with reference to a diagnosis result. However, due to a limited maintenance level, the efficiency and accuracy of vehicle maintenance are usually relatively low, and it is difficult to meet the requirement of performing diagnosis for the vehicle fast and accurately. US 2007/093947

discloses a system and a method for providing user-initiated vehicle diagnostic testing and reporting in a telematics-enabled vehicle. In the method, a request for a vehicle diagnostic test is received from the driver through a user interface of a telematics unit on the vehicle. A simplified initial diagnostic check is made and a first voice message is played for the driver that provides information concerning any detected vehicle problem. The method then undergoes a more complete diagnostic check and the resulting diagnostic information is used to select and play a second voice message to provide advises to the driver on how to fix the detected problem. Communication with a live advisor is also provided by way of a cellular or other wireless carrier system.

CN 102968112 discloses a system and a method of an expert remote network video assistance based on an automobile diagnosis device. An automobile fault diagnosis device with a network connecting function and a camera function sends a video to a maintaining expert. Then, the maintaining expert in an expert remote network video assistance website of the automobile diagnosis device guides a client to operate the automobile fault diagnosis device, and by means of the video communication and by checking the diagnosis data of a client diagnosis device, the maintaining staff can analyze the automobile faults according to the detailed automobile fault phenomena until the automobile faults are removed.

### SUMMARY

The problem of the present invention is solved by a vehicle maintenance method according to the independent claim 1 and a vehicle maintenance apparatus according to the independent claim 7. The dependent claims refer to further advantageous developments of the present invention.

In view of this, embodiments of the present disclosure provide a vehicle maintenance method and a vehicle maintenance apparatus, which can solve a technical problem in the related art that the efficiency and accuracy of vehicle maintenance is relatively low.

A first aspect of embodiments of the present disclosure provides a vehicle maintenance method, including: performing a diagnosis on a vehicle to obtain failure information of the vehicle; searching for identification information of an expert corresponding to the failure information; and setting up a voice communication connection to an expert's terminal corresponding to the identification information, so that a user performs voice communication with the expert.

Optionally, the step of searching for identification information of an expert corresponding to the failure information includes: sending maintenance document information corresponding to the failure information to the user; receiving an expert connection request as input by the user; and searching, based on the expert connection request, for the identification information of the expert corresponding to the failure information.

Optionally, the step of searching for identification information of an expert corresponding to the failure information includes: sending the failure information to a server, so that the server searches for the identification information of the corresponding expert based on the failure information; and receiving the identification information of the expert sent by the server.

Optionally, the step of searching for identification information of an expert corresponding to the failure information includes: obtaining identification information of the vehicle; determining vehicle type information of the vehicle based on the identification information; and searching for the identification information of the corresponding expert based on the vehicle type information and the failure information.

Optionally, the step of searching for identification information of an expert corresponding to the failure information includes: obtaining geographical location information of the vehicle; and searching for the identification information of the corresponding expert based on the geographical location information and the failure information.

Optionally, after the step of setting up a voice communication connection with an expert's terminal corresponding to the identification information, the method further includes: obtaining voice information sent by the expert's terminal; and playing the voice information and parsing the voice information, and determining whether the voice information includes operation instruction information; and performing an operation corresponding to the operation instruction information if the voice information includes the operation instruction information.

Optionally, the step of setting up a voice communication connection with an expert's terminal corresponding to the identification information includes: sending the failure information to the expert's terminal, so that the expert's terminal determines corresponding fee information based on the failure information; receiving the fee information returned by the expert's terminal and displaying the fee information to the user; receiving confirmation information as input by the user based on the fee information; and setting up the voice communication connection with the corresponding expert's terminal based on the confirmation information.

A second aspect of embodiments of the present disclosure provides a vehicle maintenance apparatus, including: an obtaining module configured to perform a diagnosis on a vehicle to obtain failure information of the vehicle; a searching module configured to search for identification information of an expert corresponding to the failure information; and a setup module configured to set up a voice communication connection with an expert's terminal corresponding to the identification information, so that a user performs voice communication with the expert.

Optionally, the searching module is particularly configured to: push maintenance document information corresponding to the failure information to the user; receive an expert connection request as input by the user; and search, based on the expert connection request, for the identification information of the expert corresponding to the failure information.

Optionally, the searching module is particularly configured to: send the failure information to a server, so that the server searches for the identification information of the corresponding expert based on the failure information; and receive the identification information of the expert sent by the server.

Optionally, the searching module is particularly configured to: obtain identification information of the vehicle; determine vehicle type information of the vehicle based on the identification information; and search for the identification information of the corresponding expert based on the vehicle type information and the failure information.

Optionally, the searching module is particularly configured to: obtain geographical location information of the vehicle; and search for the identification information of the corresponding expert based on the geographical location information and the failure information.

Optionally, the setup module is further configured to: obtain voice information sent by the expert's terminal; play the voice information and parse the voice information, and determine whether the voice information includes operation instruction information; and perform an operation corresponding to the operation instruction information if the voice information includes the operation instruction information.

Optionally, the setup module is particularly configured to: send the failure information to the expert's terminal, so that the expert's terminal determines corresponding fee information based on the failure information; receive the fee information returned by the expert's terminal and display the fee information to the user; receive confirmation information as input by the user based on the fee information; and set up the voice communication connection to the corresponding expert's terminal based on the confirmation information.

In the embodiments of the present disclosure, by performing diagnosis on the vehicle to obtain the failure information of the vehicle, searching for the identification information of the expert corresponding to the failure information, and setting up the voice communication connection with the expert's terminal corresponding to the identification information, such that the user can perform voice communication with the expert, and complete a vehicle maintenance under the guidance of the expert and an efficiency and an accuracy of the vehicle maintenance are improved.

### BRIEF DESCRIPTION OF DRAWINGS

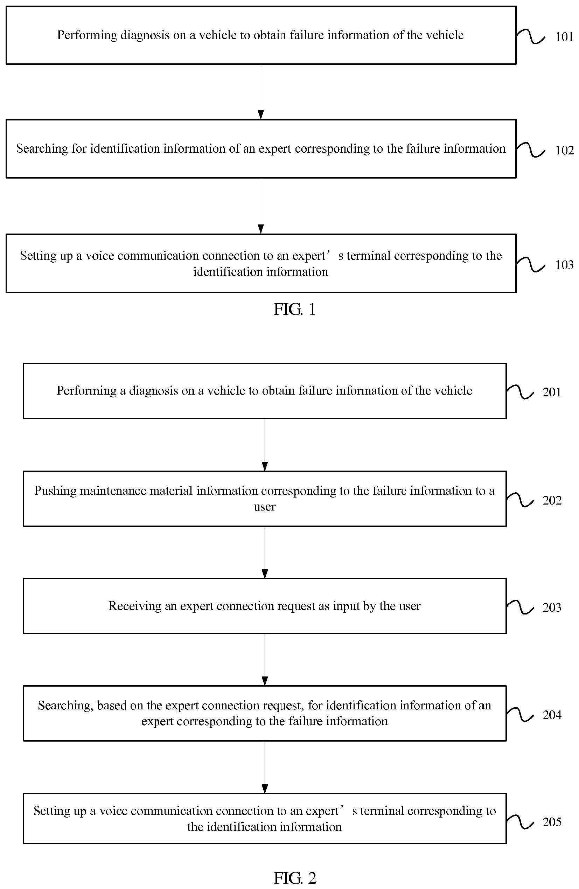

In order to describe the technical solutions in the embodiments of the present disclosure more clearly, the accompanying drawings required for describing the embodiments or the prior art are briefly described.FIG. 1 is a schematic flow diagram of a vehicle maintenance method according to Embodiment I of the present disclosure;
FIG. 2 is a schematic flow diagram of a vehicle maintenance method according to Embodiment II of the present disclosure;
FIG. 3 is a schematic flow diagram of a vehicle maintenance method according to Embodiment III of the present disclosure;
FIG. 4 is a schematic block diagram of a vehicle maintenance apparatus according to Embodiment IV of the present disclosure; and
FIG. 5 is a schematic block diagram of a vehicle maintenance device according to Embodiment V of the present disclosure.

### DESCRIPTION OF EMBODIMENTS

In the following description, to facilitate understanding of the embodiments of the present disclosure clearly, specific details about a specific system structure, technology, and the like are provided for illustration, but not for limitation. In other cases, detailed descriptions of a well-known system, apparatus, circuit, and method are omitted, so that the descriptions of the present disclosure can be avoided from being obstructed by unnecessary details.

### Embodiment I:

Embodiment I of the present disclosure provides a vehicle maintenance method. FIG. 1 is a schematic flow diagram of a vehicle maintenance method according to Embodiment I of the present disclosure. As shown in FIG. 1, the vehicle maintenance method in this embodiment may include the following steps.

Step 101, performing a diagnosis on a vehicle to obtain failure information of the vehicle.

The method in this embodiment may be performed by a vehicle maintenance device. The device may be a mobile phone, a tablet device, a computer, or the like, or may be automotive diagnosis equipment.

Optionally, the vehicle maintenance device may be equipped with an OBD (On-Board Diagnostic, on-board self-diagnostics system) interface and may perform diagnosis on the vehicle through the OBD interface. Alternatively, the vehicle maintenance device may be connected to the OBD interface through a serial port, Wi-Fi, Bluetooth, or the like, and perform the diagnosis on the vehicle through the OBD interface.

A specific implementation method for performing the diagnosis on the vehicle through the OBD interface belongs to the prior art. Details are not repeatedly described in this embodiment. The failure information of the vehicle may be obtained by performing the diagnosis on the vehicle.

The failure information may include at least one of the following: a vehicle fault code, a fault location or system, a fault category, and the like.

Step 102, searching for identification information of an expert corresponding to the failure information.

After the failure information is obtained, the identification information of the corresponding expert will be searched. In some embodiments, the identification information of the expert is pre-stored in the vehicle maintenance device, and in this step, the identification information of the expert will be searched by the vehicle maintenance device. Alternatively, the identification information of the expert is stored in a server, and in this step, the identification information of the corresponding expert is obtained by communicating with the server.

The expert is any person having vehicle maintenance knowledge, or is a person who is registered and authenticated by a server or a certification authority.

The identification information of the expert includes at least one of the following: a name of the expert, a user name, an identity card number, a code, and the like.

Different failure information may be corresponding to different experts. Optionally, a device or a server stores an association relationship between failure information and expert identification information. For example, an engine failure is associated with an expert A, and a braking system fault is associated with an expert B. Then, in this step, a search for an associated expert as the expert corresponding to the failure information may be performed based on the failure information.

The same failure information may also be associated with a plurality of experts. Correspondingly, in this step, one of associated experts may be selected as the expert corresponding to the failure information.

Step 103, setting up a voice communication connection to an expert's terminal corresponding to the identification information.

In the embodiment, the device or the server stores a correspondence between expert identification information and an expert's terminal. The corresponding expert's terminal is determined based on the identification information of the expert. Then, the voice communication connection is set up between the device and the expert's terminal, so that voice communication can be performed between a user using the device and an expert using the expert's terminal. The user may be a vehicle owner, or be a maintenance personnel, or the like.

The expert's terminal may be a mobile phone, a tablet device, a computer, or the like. The voice communication connection between the device and the expert's terminal may be set up by the server or through automatic ZigBee networking.

Alternatively, after obtaining the identification information of the expert, the device may open a third-party application such as WeChat and FaceTime and perform the voice communication connection through the third-party application.

In an actual application, when the user needs to maintain the vehicle, the user may firstly perform the diagnosis on the vehicle to obtain the failure information after the diagnosis, and perform maintenance on the vehicle based on the failure information. When the user cannot determine a maintenance solution or the fault still exists after the user completes the maintenance, the corresponding expert may be matched according to the failure information, and the expert may provide the user with guidance, answer the user's questions, and so on by making a phone call, thereby facilitating the user in completing the maintenance quickly and efficiently.

According to the vehicle maintenance method provided in this embodiment, by performing diagnosis on the vehicle to obtain the failure information of the vehicle, searching for the identification information of the expert corresponding to the failure information, and setting up the voice communication connection with the expert's terminal corresponding to the identification information, such that the user can perform voice communication with the expert, and complete vehicle maintenance under the guidance of the expert, and an efficiency and an accuracy of the vehicle maintenance are improved.

### Embodiment II:

Embodiment II of the present disclosure provides a vehicle maintenance method. FIG. 2 is a schematic flow diagram of a vehicle maintenance method according to Embodiment II of the present disclosure. As shown in FIG. 2, the vehicle maintenance method in this embodiment may include the following steps:
Step 201, performing a diagnosis on a vehicle to obtain failure information of the vehicle.

In this embodiment, a specific implementation principle of step 201 is similar to step 101 in Embodiment I. Details are not repeatedly described herein.

Step 202, sending maintenance document information corresponding to the failure information to a user.

Step 203, receiving an expert connection request as input by the user.

Step 204, searching, based on the expert connection request, for identification information of an expert corresponding to the failure information.

In this embodiment, steps 202-204 are performed to search for the identification information of the expert corresponding to the failure information.

Specifically, after the failure information of the vehicle is obtained, the corresponding maintenance document information will be firstly pushed to the user based on the failure information. The maintenance document information includes any one of the following: vehicle fault code parsing information, a circuit diagram, maintenance method information, a maintenance record, maintenance experience information, and the like.

In the embodiment, the maintenance document information is stored in the vehicle maintenance device or in a server. The device obtains the maintenance document information by communicating with the server.

A method for sending the maintenance document information includes any one of the following: displaying the maintenance document information, playing the maintenance document information, or the like.

After the failure information of the vehicle is obtained, the corresponding maintenance document information may be displayed or played to the user. For example, if the failure information of the vehicle indicates that a fault occurs on an engine of the vehicle, a circuit diagram of the engine, maintenance method information, and the like may be displayed or played to the user.

After the user looks over or listens to the maintenance document information, the vehicle may be maintained based on the maintenance document information. If the maintenance is successful, the maintenance is ended directly. If the maintenance fails, or after looking over the maintenance document information, the user is still uncertain about how to perform the maintenance, an expert connection request may be input.

The expert connection request may be input by using a voice, a key, a keyboard, a mouse, or the like.

Particularly, the user may use the voice to input "a request to connect to an expert" or a "maintenance help", or the user may press a key on the device, or the user may use the keyboard to input text, or the user may use a mouse to click an option on a screen, such that an input of the expert connection request can be completed.

After obtaining the expert connection request input by the user, the device may search, based on the expert connection request, for the identification information of the expert corresponding to the failure information.

Step 205, setting up a voice communication connection to an expert's terminal corresponding to the identification information.

In this embodiment, a specific implementation principle of step 205 is similar to step 103 in Embodiment I. Details are not described herein.

According to the vehicle maintenance method provided in this embodiment, the maintenance document information corresponding to the failure information is pushed to the user, the expert connection request as input by the user is received, and the identification information of the expert corresponding to the failure information is searched based on the expert connection request. This helps the user to maintain the vehicle based on the maintenance document information firstly, in case there is a problem during maintenance, by inputting the expert connection request and performing voice communication with the expert, such that the user may select whether it needs to connect to the expert and determine an expert connection time based on the user's requirement. In this way, maintenance costs are reduced and convenience is brought to the user.

### Embodiment III:

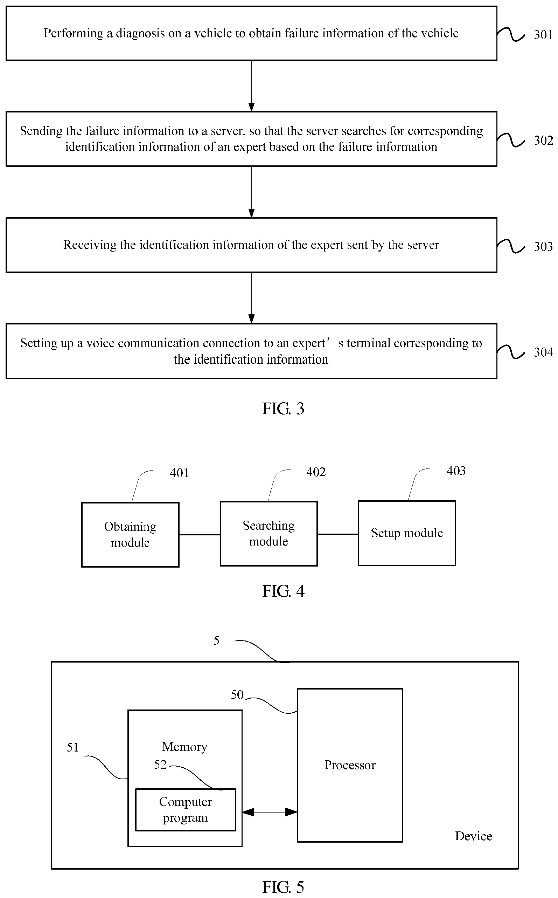

Embodiment III of the present disclosure provides a vehicle maintenance method. FIG. 3 is a schematic flow diagram of a vehicle maintenance method according to Embodiment III of the present disclosure. As shown in FIG. 3, the vehicle maintenance method in this embodiment may include the following steps.

Step 301, performing a diagnosis on a vehicle to obtain failure information of the vehicle.

In this embodiment, a specific implementation principle of step 301 is similar to step 101 in Embodiment I. Details are not repeatedly described herein.

Step 302, sending the failure information to a server, so that the server searches for corresponding identification information of an expert based on the failure information.

Step 303, receiving the identification information of the expert sent by the server.

In this embodiment, steps 301-303 are performed to search for the identification information of the expert corresponding to the failure information.

Specifically, the device communicates with the server and obtains the identification information of the corresponding expert through the server.

Step 304, setting up a voice communication connection with an expert's terminal corresponding to the identification information.

Correspondingly, the voice communication connection between the device and the expert's terminal is set up through the server.

According to the vehicle maintenance method provided in this embodiment, the failure information is sent to the server, so that the server searches for the identification information of the corresponding expert based on the failure information; and the identification information of the expert sent by the server is received. In this way, data such as the identification information of the expert can be stored on a server side, which reduces a load of the device and reduces costs of the device.

On the basis of the technical solutions provided in the foregoing embodiments, in some other embodiments, the identification information of the corresponding expert is determined according to the failure information in view of other information. The other information may include at least one of the following: vehicle type information of the vehicle, geographical location information of the vehicle, a filtering condition input by a user, and the like.

Optionally, the step of searching for identification information of an expert corresponding to the failure information may include: obtaining identification information of the vehicle; determining vehicle type information of the vehicle based on the identification information; and searching for the identification information of the corresponding expert based on the vehicle type information and the failure information.

The identification information of the vehicle may include any one of the following: a vehicle plate license number, and a vehicle identification number (Vehicle Identification Number, VIN).

The vehicle license plate number is obtained in any one of the following manners: receiving a plate number as input by the user; obtaining the vehicle license plate number by scanning or photographing a vehicle license plate of the vehicle; and obtaining the vehicle license plate number by scanning or photographing a vehicle driving license.

The vehicle identification number includes a plurality of characters, including information such as manufacturer, year, vehicle type, vehicle body type and code, engine code, and assembly location of the vehicle, which is of great importance to an accurate diagnosis and maintenance of the vehicle.

The vehicle identification number is obtained in any one of the following manners: receiving a vehicle identification number as input by the user; obtaining a vehicle identification number through an OBD interface; obtaining the vehicle identification number by scanning or photographing a vehicle body; and obtaining the vehicle identification number by scanning a vehicle driving license.

After the identification information of the vehicle is obtained, the vehicle type information of the vehicle is determined based on the identification information. The vehicle type information is information of the type of the vehicle. A correspondence between the identification information and the vehicle type information is stored in the vehicle maintenance device, or in the server, and the vehicle type information corresponding to the identification information of the vehicle is obtained through communication with the server.

Optionally, the server may be provided therein with a vehicle archives, and the archives store the correspondence between the identification information of the vehicle and the vehicle type information. When the device needs to query the vehicle type information corresponding to the identification information of the vehicle, the device may send the identification information of the vehicle to the server, and the server may search the vehicle type information corresponding to the identification information of the vehicle in a database. If there is no vehicle type information corresponding to the identification information of the vehicle, the user needs to input the vehicle type information to the device, and the device sends the correspondence between the identification information of the vehicle and the vehicle type information to the server to be stored in the server, which provides convenience for next query.

After the vehicle type information of the vehicle is obtained, the identification information of the corresponding expert is searched based on the vehicle type information and the failure information. The device or the server stores a correspondence between the vehicle type information, the failure information, and the identification information of the expert, and the vehicle type information of the vehicle and the identification information of the expert corresponding to the failure information may be searched based on the correspondence.

It may be understood that, for same failure information, if vehicle type information is different, corresponding experts will also be different. For example, an engine failure of an Audi Q5 vehicle is corresponding to an expert C, and an engine failure of a BMW vehicle is corresponding to an expert D.

Alternatively, for same vehicle type information, different failure information may be corresponding to different experts. For example, an engine failure of an Audi Q5 vehicle is corresponding to an expert C, and a braking system fault of the Audi Q5 vehicle is corresponding to an expert E.

A corresponding expert may be matched more accurately using the failure information and the vehicle type information. In this way, accuracy of vehicle maintenance is improved.

Optionally, the step of searching for identification information of an expert corresponding to the failure information further include: obtaining geographical location information of the vehicle; and searching for the identification information of the corresponding expert based on the geographical location information and the failure information.

The device or the server store a correspondence between the geographical location information, the failure information, and the identification information of the expert, and a search for the geographical location information of the vehicle and the identification information of the expert corresponding to the failure information may be performed based on the correspondence.

In the embodiment, a local expert may be matched based on the geographical location information. The local expert is more familiar with various aspects such as local climate and a road condition. In this way, efficiency and accuracy of vehicle maintenance can be improved.

Optionally, the step of searching for identification information of an expert corresponding to the failure information further include: obtaining a filtering condition as input by the user; and searching for the identification information of the corresponding expert based on the filtering condition and the failure information.

In the embodiment, the filtering condition includes at least one of the following: years of working experience of the expert, a certification platform, an evaluation rating, an evaluation score, a graduate school, a certificate of honor, and the like.

For example, if the filtering condition as input by the user is that years of years of working experience are more than or equal to five years, when a corresponding expert is searched, an expert who has worked for less than five years is filtered out, and experts corresponding to the failure information are searched only in the experts who have worked for more than or equal to five years.

When the correspondence between the other information, the failure information, and the identification information of the expert is stored in the server, the device may send, to the server, the failure information and at least one of the vehicle type information of the vehicle, the geographical location information of the vehicle, and the filtering condition as input by the user, and the server determines and returns the identification information of the corresponding expert.

On the basis of the technical solutions provided in the foregoing embodiments, preferably, after the voice communication connection to the expert's terminal corresponding to the identification information is set up, the voice information sent by the expert's terminal may be further obtained; and the voice information is played, the voice information is parsed, and whether the voice information includes the operation instruction information is determined. If the voice information includes the operation instruction information, an operation corresponding to the operation instruction information is performed.

Specifically, during the voice communication, the expert may input voice information by using a microphone, and the expert's terminal sends, to the vehicle maintenance device, the voice information as input by the expert. After receiving the voice information, the vehicle maintenance device may parse the voice information, obtains operation instruction information from the voice information, and perform a corresponding operation.

Optionally, the operation instruction information may be pre-stored in the vehicle maintenance device. When obtaining the voice information, the vehicle maintenance device may convert the voice information into corresponding text information through speech recognition technology, and determine whether the text information includes the operation instruction information. If the text information includes the operation instruction information, it means that the voice information includes the operation instruction information.

For example, operation instructions such as "read a vehicle fault code" and "clear a vehicle fault code" are pre-stored in the device. During voice communication, the expert inputs "read a vehicle fault code" by voice. After receiving the voice information sent by the expert's terminal, the vehicle maintenance device converts the voice information into text information and compares the text information with the pre-stored operation instructions. After determining that the voice information includes operation instruction information, the vehicle maintenance device performs an operation corresponding to the operation instruction information, that is, performs the operation of reading a vehicle fault code.

Alternatively, the operation instruction information may be information that follows a keyword. After voice information is obtained, whether the keyword exists in the voice information is determined. If the keyword exists in the voice information, the information following the keyword is determined as operation instruction information.

Optionally, the keyword may be "perform", "start", or the like. After the expert input "start reading a vehicle fault code" by voice, the vehicle maintenance device obtains the voice information from the expert's terminal and performs an operation corresponding to information that follows the keyword "start", that is, performing the operation of reading a vehicle fault code.

By obtaining the voice information of the expert, and parsing the voice information, obtaining the operation instruction information from the voice information and performing the corresponding operation such that it is convenient for the expert to remotely control the device to perform diagnosis and maintenance, and an efficiency of vehicle maintenance is further improved.

On the basis of the technical solutions provided in the foregoing embodiment, preferably, the identification information of the vehicle and maintenance data may be further sent to the server, so that the server updates historical maintenance data corresponding to the identification information of the vehicle.

The maintenance data may include information about a performed maintenance operation, operation instruction information provided by the expert, a maintenance result, and the like.

Correspondingly, in each connection to the expert, the identification information of the vehicle is further sent to the server, so that the server sends, to the expert's terminal, the historical maintenance data corresponding to the identification information of the vehicle, and the expert can consult the historical maintenance data of the vehicle, and perform determining and maintenance on the vehicle more accurately.

On the basis of the technical solutions provided in the foregoing embodiment, preferably, the step of setting up a voice communication connection to an expert's terminal corresponding to the identification information further include:
sending the failure information to the expert's terminal, so that the expert's terminal determines corresponding fee information based on the failure information; receiving the fee information returned by the expert's terminal and displaying the fee information to the user; receiving confirmation information as input by the user based on the fee information; and setting up the voice communication connection to the corresponding expert's terminal based on the confirmation information.

For example, if the failure information is an engine failure, and the expert determines, based on the failure information, that 500 Yuan needs to be paid, "500 Yuan" is input or selected through the expert's terminal. The expert's terminal sends the fee information "500 Yuan" to the vehicle maintenance device. The vehicle maintenance device displays the fee information to the user, so that the user determines whether the expert is selected by evaluation. If the user confirms that the expert is selected, confirmation information is input, so that voice communication is performed with the expert. If the user does not want to select the expert, an expert matching operation is performed again, or an expert service is closed. In this way, transparently charging is implemented, and a consumption requirement of the user is met.

On the basis of the technical solutions provided in the foregoing embodiment, preferably, the step of performing diagnosis on a vehicle may include: obtaining identification information of the vehicle through an OBD interface, searching for vehicle type information of the vehicle based on the identification information of the vehicle, and starting, based on the vehicle type information, corresponding diagnostic software to perform diagnosis on the vehicle.

Different diagnostic software is applicable to different vehicle types. For example, a vehicle type A is corresponding to diagnostic software 1, and a vehicle type B is corresponding to software 2. If it is detected that vehicle type information corresponding to a current vehicle is A, the diagnostic software 1 is started to perform diagnosis on the vehicle. Corresponding diagnostic software may be automatically started according to the obtained identification information of the vehicle without manual control by the user. In this way, an efficiency and accuracy of vehicle diagnosis and user experience are improved.

Optionally, the step of performing diagnosis on a vehicle may include: sending identification information of the vehicle to the server, so that the server determines historical diagnosis information of the vehicle based on the identification information of the vehicle, and the historical diagnosis information includes identification information of a system indicating that the vehicle has ever been diagnosed and a diagnosis result is normal; receiving the historical diagnosis information sent by the server, and performing, based on the historical diagnosis information, diagnosis on a system in which no diagnosis is performed on the vehicle.

Specifically, the vehicle may include a plurality of systems, such as an engine system and a braking system. Identification information of each system may be a name, a code, a vehicle type, or the like of the system. During diagnosis on the vehicle, the system which has been previously performed and there is no fault in the system through the diagnosis may be skipped, diagnosis is merely performed for a system which has never been diagnosed or a system which has been diagnosed and there is a fault in the system through the diagnosis. In this way, diagnosis efficiency is improved.

After the diagnosis, a current diagnosis result may be sent to the server, so that the server updates the historical maintenance information corresponding to the identification information of the vehicle, and performs a self-learning function of the server.

Further, diagnostic device information and diagnostic software information that are used each time may be further sent to the server, so that the server stores, in the historical maintenance information, diagnostic device information and diagnostic software information that are used at this time. The diagnostic device information may include a name, a code, a model number, and the like of a diagnostic device. The diagnostic software information may include a name, a code, a model number, and the like of diagnostic software.

Correspondingly, each time when diagnosis is performed on the vehicle, the diagnosis may be performed only on a system which hasn't been diagnosed yet by the diagnostic device or the diagnostic software that is used at this time and a system which has been previously diagnosed and there is a fault in the system through the diagnosis. In this way, diagnosis accuracy is improved.

It should be understood that, value of serial number of the steps in the aforesaid embodiment doesn't mean a sequencing of execution sequences of the steps, the execution sequence of each of the steps should be determined by functionalities and internal logics of the steps themselves, and shouldn't be regarded as limitation to an implementation process of the embodiment of the present application.

### Embodiment IV:

Embodiment IV of the present disclosure provides a vehicle maintenance apparatus. FIG. 4 is a schematic block diagram of a vehicle maintenance apparatus according to Embodiment IV of the present disclosure. For the convenience of description, only a part related to the embodiment of the present disclosure is shown. The vehicle maintenance apparatus may be a software unit, a hardware unit, or a software and hardware combined unit that is built in a vehicle maintenance device, or may be used as an independent widget integrated into the vehicle maintenance device. As shown in FIG. 4, the vehicle maintenance apparatus in this embodiment may include:
an obtaining module 401 configured to perform diagnosis on a vehicle to obtain failure information of the vehicle;
a searching module 402 configured to search for identification information of an expert corresponding to the failure information; and
a setup module 403 configured to set up a voice communication connection to an expert's terminal corresponding to the identification information, so that a user performs voice communication with the expert.

The vehicle maintenance apparatus in this embodiment may be used to perform the vehicle maintenance method in any one of the foregoing embodiments. Regarding a specific implementation principle of the vehicle maintenance apparatus, reference can be made to any one of the foregoing embodiments. Details are not repeatedly described herein.

According to the vehicle maintenance apparatus provided in this embodiment, diagnosis is performed on the vehicle to obtain the failure information of the vehicle; the identification information of the expert corresponding to the failure information is searched; and the voice communication connection to the expert's terminal corresponding to the identification information is set up, so that the user can perform voice communication with the expert, and perform vehicle maintenance under the guidance of the expert and an efficiency and an accuracy of the vehicle maintenance are improved.

Optionally, the searching module 401 is particularly configured to:
push maintenance document information corresponding to the failure information to the user;
receive an expert connection request input by the user; and
search, based on the expert connection request, for the identification information of the expert corresponding to the failure information.

Optionally, the searching module 401 may be particularly configured to:
send the failure information to a server, so that the server searches for the identification information of the corresponding expert based on the failure information; and
receive the identification information of the expert sent by the server.

Optionally, the searching module 401 is particularly configured to:
obtain identification information of the vehicle;
determine vehicle type information of the vehicle based on the identification information; and
search for the identification information of the corresponding expert based on the vehicle type information and the failure information.

Optionally, the searching module 401 is particularly configured to:
obtain geographical location information of the vehicle; and
search for the identification information of the corresponding expert based on the geographical location information and the failure information.

Optionally, the setup module 403 is further configured to:
obtain voice information sent by the expert's terminal; and
play the voice information and parse the voice information, and determine whether the voice information includes operation instruction information; and
perform an operation corresponding to the operation instruction information if the voice information includes the operation instruction information.

Optionally, the setup module 403 is particularly configured to:
send the failure information to the expert's terminal, so that the expert's terminal determines corresponding fee information based on the failure information;
receive the fee information returned by the expert's terminal and display the fee information to the user;
receive confirmation information as input by the user based on the fee information; and
set up the voice communication connection to the corresponding expert's terminal based on the confirmation information.

It can be clearly understood by one or ordinary skill in the art that, for describing conveniently and concisely, dividing of the aforesaid various functional units, functional modules is exemplified merely, in an actual application, the aforesaid functions can be assigned to different functional units and functional modules to be accomplished, that is, an inner structure of vehicle maintenance apparatus is divided into functional units or modules so as to accomplish the whole or a part of functionalities described above. The various functional units, modules in the embodiments can be integrated into a processing unit, or each of the units exists independently and physically, or two or more than two of the units are integrated into a single unit. The aforesaid integrated unit can by either realized in the form of hardware or in the form of software functional units. In addition, specific names of the various functional units and modules are only used for distinguishing from each other conveniently, but not intended to limit the protection scope of the present application. Regarding a specific working process of the units and modules in the aforesaid device, please refer to a corresponding process in the aforesaid method embodiments, it is not repeatedly described herein.

The following embodiments do not form part of the invention and are provided for illustration purposes only.

### Embodiment V:

Embodiment V of the present disclosure provides a vehicle maintenance device. FIG. 5 is a schematic block diagram of a vehicle maintenance device according to Embodiment 5 of the present disclosure. As shown in FIG. 5, the device 5 in this embodiment includes: one or more processors 50, a memory 51, and a computer program 52 stored in the memory 51 and executable on the processors 50. When executing the computer program 52, the processors 50 perform steps of the foregoing vehicle maintenance method embodiments.

Particularly, when executing the computer program 52, the processors 50 may perform the following steps:
performing diagnosis on a vehicle to obtain failure information of the vehicle;
searching for identification information of an expert corresponding to the failure information; and
setting up a voice communication connection to an expert's terminal corresponding to the identification information, so that a user performs voice communication with the expert.

Optionally, the step of searching for identification information of an expert corresponding to the failure information may include:
sending maintenance document information corresponding to the failure information to the user; receiving an expert connection request as input by the user; and searching, based on the expert connection request, for the identification information of the expert corresponding to the failure information.

Optionally, the step of searching for identification information of an expert corresponding to the failure information may include:
sending the failure information to a server, so that the server searches for the identification information of the corresponding expert based on the failure information; and receiving the identification information of the expert sent by the server.

Optionally, the step of searching for identification information of an expert corresponding to the failure information may include:
obtaining identification information of the vehicle; determining vehicle type information of the vehicle based on the identification information; and searching for the identification information of the corresponding expert based on the vehicle type information and the failure information.

Optionally, the step of searching for identification information of an expert corresponding to the failure information may include:
obtaining geographical location information of the vehicle; and searching for the identification information of the corresponding expert based on the geographical location information and the failure information.

Optionally, after the step of setting up a voice communication connection with an expert's terminal corresponding to the identification information, the steps may further include:
obtaining voice information sent by the expert's terminal; and playing the voice information, parsing the voice information, and determining whether the voice information includes operation instruction information; and performing an operation corresponding to the operation instruction information if the voice information includes the operation instruction information.

Optionally, the step of setting up a voice communication connection with an expert's terminal corresponding to the identification information may include:
sending the failure information to the expert's terminal, so that the expert's terminal determines corresponding fee information based on the failure information; receiving the fee information returned by the expert's terminal and displaying the fee information to the user; receiving confirmation information as input by the user based on the fee information; and setting up the voice communication connection to the corresponding expert's terminal based on the confirmation information.

Alternatively, when executing the computer program 52, the processors 50 perform functions of the modules/units in the foregoing the apparatus embodiment, such as, functions of the module 401 to the module 403 in FIG. 4.

The device 5 may include but is not limited to the processors 50 and the memory 51. the ordinary skilled one in the art may understand that FIG. 5 is merely an example of the device 5, and does not limit the device 5. The device 5 may include more or less components than those shown in FIG. 5, or a combination of some of the components, or different components. For example, the device may further include an input device, an output device, a network access device, a bus, and the like.

Preferably, the device 5 may be a mobile phone, a tablet device, a computer, or the like, or may be a diagnosis equipment, for example, Launch X431 PRO/PRO3S/PADIII diagnosis equipment.

Optionally, the device 5 may further include a diagnostic module configured to connect to the vehicle. An interface of the diagnostic module may be an OBD 11-16 (16-pin diagnostic interface of an open standard of OBD). The diagnostic module may include a physical layer and a link layer of an automotive communication protocol, and the link layer includes all vehicle diagnostics communication protocols.

Optionally, the device 5 may further include a network communication apparatus. The network communication apparatus may be a 3G module, a 4G module, a 5G module, a Wi-Fi module, and the like, and is configured to communicate with the server.

Optionally, the device 5 may further include a positioning apparatus. The positioning apparatus is configured to obtain geographical location information and may include at least one of the following: a GPS (Global Positioning System, Global Positioning System) module, an AGPS (Assisted Global Positioning System, Assisted Global Positioning System) module, a BD (BeiDou Navigation Satellite System) module, a GLONASS (Global Navigation Satellite System) module, and the like.

Optionally, the device 5 may further include a voice input apparatus. The voice input apparatus may be a microphone and the like and supports voice input performed by the user.

Optionally, the device 5 may further include a playback apparatus. The playback apparatus may be a speaker and the like, and is configured to play material information.

Optionally, the device 5 may further include a display apparatus. The display apparatus may be a display and the like and is configured to display information such as maintenance material.

An embodiment of the present disclosure further provides a computer readable storage medium. The computer readable storage medium stores a computer program, and when being executed by one or more processors, the computer program performs steps of the vehicle maintenance method in any one of the foregoing embodiments. The computer readable medium may include any entity or apparatus that can carry the computer program code, or an interface switching device, a recording medium, a USB flash drive, a removable hard disk, a magnetic disk, an optical disk, a computer memory, a read-only memory (ROM, Read-Only Memory), a random access memory (RAM, Random Access Memory), an electrical carrier signal, an electrical signal, a software distribution medium, and the like. It should be noted that the content included in the computer readable medium may be added or deleted appropriately according to legislation and patent practice requirements in a jurisdiction. For example, in some jurisdictions, the computer readable medium may not include an electrical carrier signal and an electrical signal according to legislation and patent practice.

An embodiment of the present disclosure further provides a computer program product, where the computer program product includes a computer program, and when the computer program is executed by one or more processors, the steps of the vehicle maintenance method in any one of the foregoing embodiments are implemented.

In the aforesaid embodiments, the description of each of the embodiments is emphasized respectively, regarding a part of one embodiment which isn't described or disclosed in detail, please refer to relevant descriptions in some other embodiments.

The invention is defined by the appended claims.

## Claims

1. A vehicle maintenance method implemented by a vehicle maintenance apparatus, the method comprising:
(101) performing a diagnosis on a vehicle to obtain failure information of the vehicle;
(102) searching for identification information of an expert corresponding to the failure information; and
(103) setting up a voice communication connection with an expert's terminal corresponding to the identification information, to establish a voice communication between the vehicle maintenance apparatus and the expert's terminal;
obtaining voice information sent by the expert's terminal;
playing the voice information, and parsing the voice information, and determining whether the voice information includes operation instruction information; and
performing an operation corresponding to the operation instruction information, if the voice information includes the operation instruction information.

2. The vehicle maintenance method according to claim 1, wherein the step of searching for identification information of an expert corresponding to the failure information comprises:
(202) sending maintenance document information corresponding to the failure information to the user;
(203) receiving an expert connection request as input by the user; and
(204) searching, based on the expert connection request, for the identification information of the expert corresponding to the failure information.

3. The vehicle maintenance method according to claim 1, wherein the step of searching for identification information of an expert corresponding to the failure information comprises:
(302) sending the failure information to a server, so that the server searches for the identification information of the corresponding expert based on the failure information; and
(303) receiving the identification information of the corresponding expert sent by the server.

4. The vehicle maintenance method according to claim 1, wherein the step of searching for identification information of an expert corresponding to the failure information comprises:
obtaining identification information of the vehicle;
determining vehicle type information of the vehicle based on the identification information; and
searching for the identification information of the corresponding expert based on the vehicle type information and the failure information.

5. The vehicle maintenance method according to claim 1, wherein the step of searching for identification information of an expert corresponding to the failure information comprises:
obtaining geographical location information of the vehicle; and
searching for the identification information of the corresponding expert based on the geographical location information and the failure information.

6. The vehicle maintenance method according to any one of claims 1 to 5, wherein the step of setting up a voice communication connection with a terminal of the expert's terminal corresponding to the identification information comprises:
sending the failure information to the expert's terminal, to determine by the expert's terminal, corresponding fee information based on the failure information;
receiving the fee information returned by the expert's terminal and displaying the fee information to the user;
receiving confirmation information as input by the user based on the fee information; and
setting up the voice communication connection with the corresponding expert's terminal based on the confirmation information.

7. A vehicle maintenance apparatus comprising:
an obtaining module (401) configured to perform a diagnosis on a vehicle to obtain failure information of the vehicle;
a searching module (402) configured to search for identification information of an expert corresponding to the failure information; and
a setup module (403) configured to set up a voice communication connection with an expert's terminal corresponding to the identification information, to establish a voice communication between the vehicle maintenance apparatus and the expert's terminal,
wherein the setup module (403) is further configured to:
obtain voice information sent by the expert's terminal;
play the voice information and parse the voice information, and determine whether the voice information includes operation instruction information; and
perform an operation corresponding to the operation instruction information, if the voice information includes the operation instruction information.

8. The vehicle maintenance apparatus according to claim 7, wherein the searching module (402) is particularly configured to:
push maintenance document information corresponding to the failure information to the user;
receive an expert connection request as input by the user; and
search, based on the expert connection request, for the identification information of the expert corresponding to the failure information.

9. The vehicle maintenance apparatus according to claim 7, **characterized in that**, the searching module (402) is particularly configured to:
send the failure information to a server, to search for the identification information of the corresponding expert based on the failure information by communicating with the server; and
receive the identification information of the expert sent by the server.

10. The vehicle maintenance apparatus according to claim 7, wherein the searching module (402) is particularly configured to:
obtain identification information of the vehicle;
determine vehicle type information of the vehicle based on the identification information; and
search for the identification information of the corresponding expert based on the vehicle type information and the failure information.

11. The vehicle maintenance apparatus according to claim 7, wherein the searching module (402) is particularly configured to:
obtain geographical location information of the vehicle; and
search for the identification information of the corresponding expert based on the geographical location information and the failure information.

12. The vehicle maintenance apparatus according to any one of claims 7 to 11, wherein the setup module (403) is particularly configured to:
send the failure information to the expert's terminal, to determine corresponding fee information based on the failure information;
receive the fee information returned by the expert's terminal and display the fee information to the user;
receive confirmation information as input by the user based on the fee information; and
set up the voice communication connection to the corresponding expert's terminal based on the confirmation information.

## Patentansprüche

1. Fahrzeugwartungsverfahren, welches durch eine Fahrzeugwartungsvorrichtung ausgeführt wird, wobei das Verfahren umfasst:
(101) ein Durchführen einer Diagnose an einem Fahrzeug, um Fehlerinformationen des Fahrzeugs zu erhalten;
(102) ein Suchen nach Identifikationsinformationen eines Experten, die den Fehlerinformationen entsprechen; und
(103) ein Aufbauen einer Sprachkommunikationsverbindung mit einem Endgerät des Experten entsprechend den Identifikationsinformationen, um eine Sprachkommunikation zwischen der Fahrzeugwartungsvorrichtung und dem Endgerät des Experten aufzubauen;
ein Erhalten von Sprachinformationen, die von dem Endgerät des Experten gesendet werden;
ein Abspielen der Sprachinformationen und ein Analysieren der Sprachinformationen und ein Bestimmen, ob die Sprachinformationen Bedienungsanweisungsinformationen enthalten; und
ein Durchführen eines Arbeitsvorganges, der den Bedienungsanweisungsinformationen entspricht, wenn die Sprachinformation die Bedienungsanweisungsinformationen enthält.

2. Fahrzeugwartungsverfahren nach Anspruch 1, wobei der Schritt des Suchens nach Identifikationsinformationen eines Experten, die den Fehlerinformationen entsprechen, umfasst:
(202) ein Senden von Wartungsdokumentinformationen, die den Fehlerinformationen entsprechen, an den Benutzer;
(203) ein Empfangen einer Expertenverbindungsanfrage als eine Eingabe durch den Benutzer; und
(204) ein Suchen, basierend auf der Expertenverbindungsanfrage, nach den Identifikationsinformationen des Experten, die den Fehlerinformationen entsprechen.

3. Fahrzeugwartungsverfahren nach Anspruch 1, wobei der Schritt des Suchens nach Identifikationsinformationen eines Experten, die den Fehlerinformationen entsprechen, umfasst:
(302) ein Senden der Fehlerinformationen an einen Server, so dass der Server basierend auf den Fehlerinformationen nach den Identifikationsinformationen des entsprechenden Experten sucht; und
(303) ein Empfangen der von dem Server gesendeten Identifikationsinformationen des entsprechenden Experten.

4. Fahrzeugwartungsverfahren nach Anspruch 1, wobei der Schritt des Suchens nach Identifikationsinformationen eines Experten, die den Fehlerinformationen entsprechen, umfasst:
ein Erhalten von Identifikationsinformationen des Fahrzeugs;
ein Bestimmen von Fahrzeugtypinformationen des Fahrzeugs basierend auf den Identifikationsinformationen; und
ein Suchen nach den Identifikationsinformationen des entsprechenden Experten basierend auf den Fahrzeugtypinformationen und den Fehlerinformationen.

5. Fahrzeugwartungsverfahren nach Anspruch 1, wobei der Schritt des Suchens nach Identifikationsinformationen eines Experten, die den Fehlerinformationen entsprechen, umfasst:
ein Erhalten von geografischen Standortinformationen des Fahrzeugs; und
ein Suchen nach den Identifikationsinformationen des entsprechenden Experten basierend auf den geografischen Standortinformationen und den Fehlerinformationen.

6. Fahrzeugwartungsverfahren nach einem der Ansprüche 1 bis 5, wobei der Schritt des Einrichtens einer Sprachkommunikationsverbindung mit einem Endgerät des Expertenendgeräts entsprechend den Identifikationsinformationen umfasst:
ein Senden der Fehlerinformationen an das Endgerät des Experten, um durch das Endgerät des Experten entsprechende Gebühreninformationen basierend auf den Fehlerinformationen zu bestimmen;
ein Empfangen der vom Endgerät des Experten zurückgegebenen Gebühreninformationen und ein Anzeigen der Gebühreninformationen für den Benutzer;
ein Empfangen von Bestätigungsinformationen als eine Eingabe durch den Benutzer basierend auf den Gebühreninformationen; und
ein Aufbauen der Sprachkommunikationsverbindung mit dem entsprechenden Endgerät des Experten basierend auf den Bestätigungsinformationen.

7. Fahrzeugwartungsvorrichtung, welche aufweist:
ein Beschaffungsmodul (401), das ausgestaltet ist, um eine Diagnose an einem Fahrzeug durchzuführen, um Fehlerinformationen des Fahrzeugs zu erhalten;
ein Suchmodul (402), das ausgestaltet ist, um nach Identifikationsinformationen eines Experten entsprechend den Fehlerinformationen zu suchen; und
ein Einrichtungsmodul (403), das ausgestaltet ist, um eine Sprachkommunikationsverbindung mit einem Endgerät des Experten entsprechend den Identifikationsinformationen aufzubauen, um eine Sprachkommunikation zwischen der Fahrzeugwartungsvorrichtung und dem Endgerät des Experten aufzubauen,
wobei das Einrichtungsmodul (403) ferner ausgestaltet ist,
um von dem Endgerät des Experten gesendete Sprachinformationen zu erhalten;
um die Sprachinformationen abzuspielen und um die Sprachinformationen zu analysieren und um zu bestimmen, ob die Sprachinformationen Bedienungsanweisungsinformationen enthalten; und
um einen Arbeitsvorgang entsprechend der Bedienungsanweisungsinformation durchzuführen, wenn die Sprachinformation die Bedienungsanweisungsinformation enthält.

8. Fahrzeugwartungsvorrichtung nach Anspruch 7, wobei das Suchmodul (402) insbesondere ausgestaltet ist,
um Wartungsdokumentinformationen, die den Fehlerinformationen entsprechen, an den Benutzer zu bringen;
um eine Expertenverbindungsanfrage als eine Eingabe durch den Benutzer zu empfangen; und
um basierend auf der Expertenverbindungsanfrage nach den Identifikationsinformationen des Experten zu suchen, die den Fehlerinformationen entsprechen.

9. Fahrzeugwartungsvorrichtung nach Anspruch 7, **dadurch gekennzeichnet, dass** das Suchmodul (402) insbesondere ausgestaltet ist,
um die Fehlerinformationen an einen Server zu senden, um basierend auf den Fehlerinformationen durch Kommunikation mit dem Server nach den Identifikationsinformationen des entsprechenden Experten zu suchen; und
um die vom Server gesendeten Identifikationsinformationen des Experten zu empfangen.

10. Fahrzeugwartungsvorrichtung nach Anspruch 7, wobei das Suchmodul (402) insbesondere ausgestaltet ist,
um Identifikationsinformationen des Fahrzeugs zu erhalten;
um basierend auf den Identifikationsinformationen Fahrzeugtypinformationen des Fahrzeugs zu bestimmen; und
um nach den Identifikationsinformationen des entsprechenden Experten basierend auf den Fahrzeugtypinformationen und den Fehlerinformationen zu suchen.

11. Fahrzeugwartungsvorrichtung nach Anspruch 7, wobei das Suchmodul (402) insbesondere ausgestaltet ist,
um Informationen zum geografischen Standort des Fahrzeugs zu erhalten; und
um nach den Identifikationsinformationen des entsprechenden Experten basierend auf den Informationen zum geografischen Standort und den Fehlerinformationen zu suchen.

12. Fahrzeugwartungsvorrichtung nach einem der Ansprüche 7 bis 11, wobei das Einrichtungsmodul (403) insbesondere ausgestaltet ist,
um die Fehlerinformationen an das Endgerät des Experten zu senden, um entsprechende Gebühreninformationen basierend auf den Fehlerinformationen zu bestimmen;
um die von dem Endgerät des Experten zurückgegebenen Gebühreninformationen zu empfangen und dem Benutzer die Gebühreninformationen anzuzeigen;
um von Bestätigungsinformationen als eine Eingabe durch den Benutzer basierend auf den Gebühreninformationen zu empfangen; und
um der Sprachkommunikationsverbindung zu dem entsprechenden Endgerät des Experten anhand der Bestätigungsinformationen aufzubauen.

## Revendications

1. Procédé d'entretien de véhicule mis en œuvre par un appareil d'entretien de véhicule, le procédé comprenant :
(101) la réalisation d'un diagnostic sur un véhicule pour obtenir des informations de défaillance du véhicule ;
(102) la recherche d'informations d'identification d'un expert correspondant aux informations de défaillance ; et
(103) l'établissement d'une connexion de communication vocale avec un terminal d'un expert correspondant aux informations d'identification, pour établir une communication vocale entre l'appareil d'entretien de véhicule et le terminal de l'expert ;
l'obtention d'informations vocales envoyées par le terminal de l'expert ;
la lecture des informations vocales et l'analyse syntaxique des informations vocales, et la détermination si les informations vocales incluent des informations d'instruction d'opération ; et
la réalisation d'une opération correspondant aux informations d'instruction d'opération, si les informations vocales incluent les informations d'instruction d'opération.

2. Procédé d'entretien de véhicule selon la revendication 1, dans lequel l'étape de recherche d'informations d'identification d'un expert correspondant aux informations de défaillance comprend :
(202) l'envoi d'informations de document d'entretien correspondant aux informations de défaillance à l'utilisateur ;
(203) la réception d'une demande de connexion d'expert comme une entrée par l'utilisateur ; et
(204) la recherche, sur la base de la demande de connexion d'expert, des informations d'identification de l'expert correspondant aux informations de défaillance.

3. Procédé d'entretien de véhicule selon la revendication 1, dans lequel l'étape de recherche d'informations d'identification d'un expert correspondant aux informations de défaillance comprend :
(302) l'envoi des informations de défaillance à un serveur, de manière que le serveur recherche les informations d'identification de l'expert correspondant sur la base des informations de défaillance ; et
(303) la réception des informations d'identification de l'expert correspondant envoyées par le serveur.

4. Procédé d'entretien de véhicule selon la revendication 1, dans lequel l'étape de recherche d'informations d'identification d'un expert correspondant aux informations de défaillance comprend :
l'obtention d'informations d'identification du véhicule ;
la détermination d'informations de type de véhicule du véhicule sur la base des informations d'identification ; et
la recherche des informations d'identification de l'expert correspondant sur la base des informations de type de véhicule et des informations de défaillance.

5. Procédé d'entretien de véhicule selon la revendication 1, dans lequel l'étape de recherche d'informations d'identification d'un expert correspondant aux informations de défaillance comprend :
l'obtention d'informations d'emplacement géographique du véhicule ; et
la recherche des informations d'identification de l'expert correspondant sur la base des informations d'emplacement géographique et des informations de défaillance.

6. Procédé d'entretien de véhicule selon l'une quelconque des revendications 1 à 5, dans lequel l'étape d'établissement d'une connexion de communication vocale avec un terminal du terminal de l'expert correspondant aux informations d'identification comprend :
l'envoi des informations de défaillance au terminal de l'expert, pour déterminer, par le terminal de l'expert, des informations de frais correspondantes sur la base des informations de défaillance ;
la réception des informations de frais renvoyées par le terminal de l'expert et l'affichage des informations de frais pour l'utilisateur ;
la réception d'informations de confirmation comme une entrée par l'utilisateur sur la base des informations de frais ; et
l'établissement de la connexion de communication vocale avec le terminal de l'expert correspondant sur la base des informations de confirmation.

7. Appareil d'entretien de véhicule comprenant :
un module d'obtention (401) configuré pour réaliser un diagnostic sur un véhicule pour obtenir des informations de défaillance du véhicule ;
un module de recherche (402) configuré pour rechercher des informations d'identification d'un expert correspondant aux informations de défaillance ; et
un module d'établissement (403) configuré pour établir une connexion de communication vocale avec un terminal d'un expert correspondant aux informations d'identification, pour établir une communication vocale entre l'appareil d'entretien de véhicule et le terminal de l'expert,
dans lequel le module d'établissement (403) est configuré en outre pour :
obtenir des informations vocales envoyées par le terminal de l'expert ;
lire les informations vocales et l'analyse syntaxique des informations vocales, et déterminer si les informations vocales incluent des informations d'instruction d'opération ; et
réaliser une opération correspondant aux informations d'instruction d'opération, si les informations vocales incluent les informations d'instruction d'opération.

8. Appareil d'entretien de véhicule selon la revendication 7, dans lequel le module de recherche (402) est configuré en particulier pour :
présenter des informations de document d'entretien correspondant aux informations de défaillance à l'utilisateur ;
recevoir une demande de connexion d'expert comme une entrée par l'utilisateur ; et rechercher, sur la base de la demande de connexion d'expert, les informations d'identification de l'expert correspondant aux informations de défaillance.

9. Appareil d'entretien de véhicule selon la revendication 7, **caractérisé en ce que** le module de recherche (402) est configuré en particulier pour :
envoyer les informations de défaillance à un serveur, pour rechercher les informations d'identification de l'expert correspondant sur la base des informations de défaillance en communiquant avec le serveur ; et
recevoir les informations d'identification de l'expert envoyées par le serveur.

10. Appareil d'entretien de véhicule selon la revendication 7, dans lequel le module de recherche (402) est configuré en particulier pour :
obtenir des informations d'identification du véhicule ;
déterminer des informations de type de véhicule du véhicule sur la base des informations d'identification ; et
rechercher les informations d'identification de l'expert correspondant sur la base des informations de type de véhicule et des informations de défaillance.

11. Appareil d'entretien de véhicule selon la revendication 7, dans lequel le module de recherche (402) est configuré en particulier pour :
obtenir des informations d'emplacement géographique du véhicule ; et
rechercher les informations d'identification de l'expert correspondant sur la base des informations d'emplacement géographique et des informations de défaillance.

12. Appareil d'entretien de véhicule selon l'une quelconque des revendications 7 à 11, dans lequel le module d'établissement (403) est configuré en particulier pour :
envoyer les informations de défaillance au terminal de l'expert, pour déterminer des informations de frais correspondantes sur la base des informations de défaillance ;
recevoir les informations de frais renvoyées par le terminal de l'expert et l'affichage des informations de frais pour l'utilisateur ;
recevoir des informations de confirmation comme une entrée par l'utilisateur sur la base des informations de frais ; et
établir la connexion de communication vocale avec le terminal de l'expert correspondant sur la base des informations de confirmation.
